# EUROPEAN PATENT APPLICATION

(11) **EP 2 372 512 A1**
(43) Date of publication of application: **05.10.2011**
(21) Application number: 10003477.6
(22) Date of filing: 30.03.2010
(51) Int. Cl.: G06F 3/048, G06F 3/01, B60K 35/00, B60K 37/04, B60K 37/06, H04N 13/00

(54) **Vehicle user interface unit for a vehicle electronic device**

(71) Applicant: Harman Becker Automotive Systems GmbH, 76307 Karlsbad (DE)
(72) Inventor: Hess, Wolfgang, 76307 Karlsbad (DE)
(74) Representative: Bertsch, Florian Oliver

(57) **Abstract**

The present invention relates to a vehicle user interface unit for a vehicle electronic device, comprising:
- a 3D display unit (101) comprising a display (102), the 3D display unit being adapted to display, in operation, an image such that the image is perceived by a user as a virtual 3D image (110) at least partially located in front of the display (102) when the user (140) observes the display (102);
- a display control unit (120) adapted to control the generation of the image by the 3D display unit (101) such that said virtual 3D image (110) comprises a 3D object (111) having at least two regions (112, 113) located in different spatial planes, each region comprising plural interaction elements (115); and
- an input unit (130) adapted to detect the location of a user-controlled object (150) and to interpret the detection of a predefined variation of the user-controlled object (150) as a selection of one of said interaction elements (115) comprised in the virtual 3D image (110).

## Description

### Technical Field

The invention relates to a vehicle user interface unit for a vehicle electronic device comprising a display unit, a display control unit and an input unit, to a vehicle infotainment system comprising such a vehicle user interface unit, and to a method of operating a vehicle electronic device.

### Background

In modern vehicles, a plurality of functions relating to the vehicle itself or to an electronic device provided in the vehicle, such as an infotainment system, need to be controlled, which is generally performed either by the driver or by a passenger. Functions and information that need to be controlled or displayed can relate to driver assistance systems, a multimedia system such as a car radio or mobile communication systems which communicate e.g. via GSM or UMTS. Also information from outside the vehicle may need to be made available to the driver or passenger, for example from a card to world communication, such as a car to car communication or a car to infrastructure communication. A head unit is usually provided which comprises a user interface with a display and control elements by means of which the user can control these functions. For the face plate of such a head unit only a limited amount of space is available in the dashboard, which has to be shared by mechanical control elements and the display. In consequence, only relatively few information can be displayed simultaneously to the user, and a few control elements need to operate and control a vast variety of functions. This is generally achieved by providing a menu tree structure with main menus and plural submenus, through which a user has to browse in order to reach a particular function. The user thus needs to spend a considerable amount of time for moving through the menu structure before reaching a particular menu item. During this time the driver is distracted from traffic when he uses the user interface of the head unit, which may result in a dangerous situation.

Operating such a system by means of speech recognition does generally not result in a considerable improvement, due to the numerous enquiries by the system and the browsing through the menu structure which is still necessary.

A certain improvement can be achieved by a touch screen, in which instead of mechanical control elements, graphical control elements can be provided, thus enabling a larger display size on a similar size of face plate. Even so, the available physical space is still rather limited, so that only a very limited number of information or menu items can be displayed, with the presentation generally being confusing, particularly for complex menu structures. Further, the control elements are generally graphically relatively small and do not provide any haptic feedback, so that a user interface comprising a touchscreen is difficult to operate inside a vehicle, in particular for the driver. Furthermore, the touchscreen can become soiled, e.g. by fingerprints, which deteriorates the quality of the displayed image.

It is thus desirable to improve the presentation of such menu structures and other information, and to facilitate the selection of menu items for controlling functions of a vehicle electronic device, the vehicle itself or for adjusting parameters.

### Summary

Accordingly, there is a need to mitigate at least some of the drawbacks mentioned above, in particular to provide an improved vehicle user interface unit which enables a larger and more clearly arranged display of menu items or information and a more intuitive operation.

This need is met by the features of the independent claims. In the dependent claims preferred embodiments of the invention are described.

According to an aspect of the present invention, a vehicle user interface unit for a vehicle electronic device is provided, which comprises a three-dimensional (3D) display unit, a display control unit and an input unit. The 3D display unit comprises a display and is adapted to display, in operation, an image such that the image is perceived by a user as a virtual three-dimensional (3D) image at least partially located in front of the display when the user observes the display. The display control unit is adapted to control the generation of the image by the 3D display unit such that said virtual 3D image comprises a three-dimensional (3D) object having at least two regions located in different spatial planes, each region comprising plural interaction elements. The input unit is adapted to detect the location of a user-controlled object and to interpret the detection of a pre-defined variation of the user-controlled object as a selection of one of said interaction elements comprised in the virtual 3D image.

By displaying the interaction elements, which may be menu items or information elements (e.g. displaying certain information or parameters), in different regions on different spatial planes, which may be linked with one another, a more complete presentation of the available information and a clear arrangement even of a large amount of information can be achieved. The arrangement of the interaction elements on different virtual planes is less confusing and can allow a faster access to a particular information element or menu item. The possibility to select the interaction elements in the virtual 3D image by means of the user-controlled object enables an intuitive operation of the user interface and a fast access to the plural interaction elements.

According to an embodiment of the invention, the input unit is configured such that the pre-defined variation of the user-controlled object comprises the movement of the user-controlled object to within a predetermined distance of an interaction element in the virtual 3D image, the detection of such a movement being interpreted as a selection of the corresponding interaction element.

The user-controlled object may for example be part of the hand of the user, or an object held by the hand or attached to the hand of the user. The user can thus operate the interaction elements by simply (virtually) touching the interaction elements in the virtual 3D image with the user-controlled object, resulting in a fast and intuitive operation.

The user-controlled object may for example be a finger of the user. The input unit can then be adapted to detect a gesture performed by the finger or a movement of the finger as a selection of one of the interaction elements. For example, the flipping or the pointing of the finger or a touch to the interaction element in the virtual 3D image may be detected as a selection.

The display control unit may be configured to control the generation of the image in such a way that the region of the 3D object which is located closer to an observing user in the virtual 3D image is an active region in which the interaction elements are selectable, whereas the information elements of the at least one other region are not selectable. A robust operation of the user interface can thus be ensured, and an accidental selection of interaction elements can be prevented.

The display control unit may be configured to control the generation of the image in such a way that the 3D object is a polyhedron, preferably a cube or a cuboid, and that each of said regions corresponds to a face of the polyhedron. As each face of the polyhedron may comprise a number of interaction elements, the interaction elements, e.g. menu items or information elements, can be clearly arranged and a comprehensive presentation of available information becomes possible. Other embodiments are certainly conceivable, in which the display control unit is configured to generate a 3D object other than a polyhedron for arranging the regions comprising the interaction elements, it may for example generate a sphere with each of the regions corresponding to a spherical cap.

The display control unit may be configured to control the generation of the image in such a way that the polyhedron is oriented such that one of its faces is facing the observing user, the region corresponding to said face being an active region the interaction elements of which are selectable. The interaction elements on the other faces can thus still be visible, yet they may or may not be selectable, depending on the configuration.

The input unit may be adapted to detect a second predefined variation of the user-controlled object and to interpret it as a command to change the spatial arrangement of the at least two regions.

In the above example of a polyhedron as the 3D object, the display control unit may be adapted to change the spatial arrangement of the at least two regions by rotating the polyhedron such that a different face of the polyhedron comprising different interaction elements is facing the observing user. That way, by a simple rotation of the 3D object, different menu lists or information lists can be presented to the user, enabling a clear and concise presentation of such information.

In a particular embodiment, the input unit is adapted to detect the positioning of a finger of the observing user at a boundary or a corner of one of said regions and the movement of the finger over a predetermined distance as the second predefined variation of the user-controlled object. A cube may then for example be rotated by placing the finger on a corner of the cube in the virtual image and dragging the finger in the desired direction.

The display control unit may further be configured to control the generation of the image in such a way that at least one of said regions is partially transparent to enable the observation of another of said regions. The faces of the polyhedron may thus be partially transparent, so as to enable the observation of the other faces and of the interaction elements located thereon. The transparency may be within a range of 0% to about 50%, preferably of about 10% to about 20%. A value of 0% would correspond to the region being opaque. When using a value from within these ranges of transparency, the region facing the observing user is still clearly visible, while the interaction elements location in another region covered by said transparent region can already be anticipated.

The user interface can thus enable a comprehensive representation of even complex menu structures and a straight-forward selection of menu items, even if only limited physical space is available for the display of the user interface. This is a consequence of the plural virtual planes employed for arranging the interaction elements in three dimensions.

For facilitating the operation of the user interface, the user interface unit can be adapted to provide an acoustical feedback to the user when the user-controlled object comes to within a predetermined distance of an element of the 3D object in the virtual 3D image and/or when a selection of one of the interaction elements is detected. The acoustical feedback may comprise different sounds for different events. One sound may for example be played back when the user-controlled object approaches a virtual plane of the 3D object, while another sound may be played back when the user-controlled object is moved into the vicinity of an interaction element. The user-controlled object, e.g. the finger, may then perform a particular gesture to select the interaction element, which can again by confirmed by a sound.

Accordingly, operation of the user interface by the user-controlled object is facilitated, and no haptic feedback is required.

The input unit may further comprise a stereoscopic camera adapted to monitor an area adjacent to a position at which the virtual 3D image is created for detecting the location of the user-controlled object and a variation thereof. By means of the stereoscopic camera a precise determination of the position of the user-controlled object in three dimensions can be achieved, and a reliable evaluation of object position and of gestures becomes possible. The stereoscopic camera can be implemented as a single stereoscopic camera or as two or more separate conventional cameras.

The vehicle user interface unit may further comprise a camera for monitoring the viewpoint from which the user observes the display. The user interface can then be adapted to determine the position at which the virtual 3D image is seen by the user observing the display on the basis of the detected viewpoint of the user. By means of the camera the position of the head, the face or the eyes of the user may for example be tracked in order to determine the viewpoint of the user. The camera used for monitoring the viewpoint may be the same as the stereoscopic camera mentioned above. If the display of the 3D display unit is observed from different directions, the virtual 3D image can be generated at different spatial positions, and the camera for monitoring the viewpoint enables the determination of these spatial positions. By performing such a correction for the viewpoint, the precision of the activation of the virtual interaction elements by means of the user-controlled object can be improved. It thus becomes possible to precisely determine at which position relative to the virtual 3D object the user-controlled object is located.

In an embodiment of the invention, the 3D display unit is an autostereoscopic 3D display unit. With an autostereoscopic display unit, the user is enabled to perceive the virtual 3D image by simply observing the screen without requiring any additional equipment, such as particular types of goggles or shutter glasses.

In other embodiments, it is also possible that the 3D display unit comprises shutter glasses and employs an alternating frame sequencing technique so as to generate the virtual 3D image when the user observes the display.

The 3D display unit may be housed in a face plate of the vehicle electronic device. It is also possible to house it in another enclosure, it may for example be implemented in a screen provided in a headrest, or at another location inside the vehicle.

In a further embodiment, the vehicle user interface unit is part of a vehicle head unit. A plurality of functions of electronic devices provided inside the vehicle or of the vehicle itself may thus be controlled by the vehicle user interface unit.

According to a further aspect of the present invention, a vehicle infotainment system comprising a vehicle user interface unit as described above is provided.

A further aspect of the present invention relates to a vehicle cabin comprising an electronic device with a vehicle user interface unit according to one of the above-described embodiments. In the vehicle cabin one or more cameras for monitoring the viewpoint of the user may be mounted, so as to monitor the position of the driver's head and/or the heads of passengers.

According to a further aspect of the present invention, a method of operating a vehicle electronic device is provided. The method comprises the step of generating an image such that the image is perceived by a user as a virtual 3D image at least partially located in front of a display of a 3D display unit used to generate the image, when the observer observes the display. It further comprises the steps of controlling the generation of the image by the 3D display unit such that the virtual 3D image comprises a 3D object having at least two regions located in different spatial planes, each region comprising plural interaction elements, and of detecting the location of a user-controlled object and interpreting the detection of a predefined variation of the user-controlled object as a selection of one of said interaction elements comprised in the virtual 3D image.

By means of the inventive method, advantages similar to the ones outlined above can be achieved.

According to an embodiment of the method of the present invention, the method can be performed by an embodiment of the vehicle user interface unit described above, and the method may comprise corresponding method steps.

In particular, the method may further comprise the detection of the movement of the user-controlled object to within a predetermined distance of an interaction element in the virtual 3D image as the predefined variation of the user-controlled object, and the interpretation of the detection of such a movement as a selection of the corresponding interaction element.

The method may comprise the detection of a gesture performed by the finger of a user or a movement of the finger as a variation of the user-controlled object.

In the method, the generation of the image may be controlled in such a way that the 3D object in the virtual 3D image is a polyhedron, and that each of the regions corresponds to a face of the polyhedron.

The method may further comprise the step of detecting a second predefined variation of the user-controlled object and the interpretation of such a second predefined variation as a command to change the spatial arrangement of the at least two regions. The spatial arrangement may be changed by rotating the polyhedron so that a different face of the polyhedron faces the observing user.

The method may further comprise the step of providing an acoustical feedback to the user when the user-controlled object comes to within a predetermined distance of an element of the 3D object in the virtual 3D image and/or when a selection of one of the interaction elements is detected.

The method may further comprise the step of monitoring the viewpoint from which the user observes the display, and to determine the position at which the virtual 3D image is seen by the user observing the display on the basis of the detected viewpoint of the user.

The above embodiments of the inventive method achieve advantages similar to the ones outlined with respect to the corresponding embodiments of the inventive vehicle user interface unit.

It is to be understood that the features mentioned above and those yet to be explained below can be used not only in the respective combinations indicated, but also in other combinations or in isolation, without leaving the scope of the present invention.

### Brief Description of the Drawings

The foregoing and other features and advantages of the invention will become further apparent from the following detailed description of illustrative embodiments when read in conjunction with the accompanying drawings. In the drawings, like reference numerals refer to like elements.
Fig. 1 shows a schematic representation of a vehicle user interface unit according to an embodiment of the present invention.
Fig. 2 is a flow diagram illustrating a method according to an embodiment of the present invention.
Figs. 3A to 3C show a schematic drawing illustrating the generation of a virtual 3D image comprising a 3D object by means of a 3D display unit, and properties of the 3D object according to an embodiment of the present invention.

### Detailed Description

In the following embodiments of the present invention will be described in detail with reference to the accompanying drawings. It should be noted that the drawings are to be regarded as being schematic representations only, and elements in the drawings are not necessarily to scale with each other. Rather, the representation of various elements is chosen such that their function and general purpose become apparent to a person skilled in the art.

It is also be understood that in the following description of embodiments the partitioning of embodiments in functional blocks or units shown in the drawings is not to be construed as indicating that these units necessarily are implemented as physically separate units, but functional blocks or units shown or described may be implemented as separate units, circuits, chips or circuit elements, but one or more functional blocks or units may as well be implemented in a common circuit, chip, circuit element or unit.

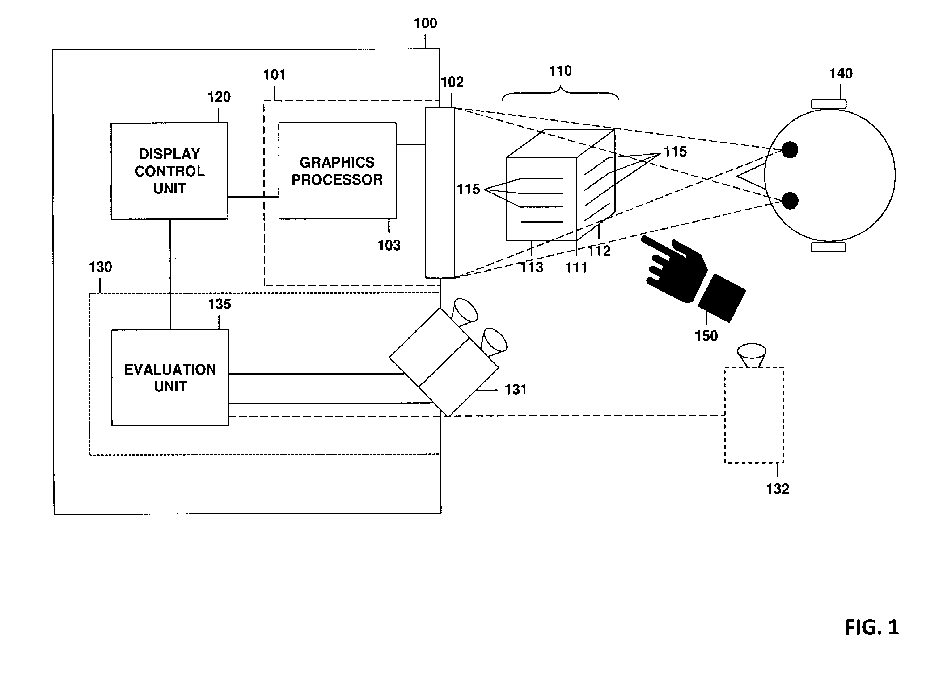

Fig. 1 shows a schematic representation of a vehicle user interface unit 100, which can be part of a head unit, a vehicle infotainment system, or any other vehicle electronic device. A display control unit 120 is provided which controls the operation of the vehicle user interface unit 100. Vehicle user interface unit 100 further comprises a 3D display unit 101 and an input unit 130 both in communication with display control unit 120.

In the embodiment of Fig. 1 the 3D display unit 101 comprises a display 102 in communication with a graphics processor 103. Graphics processor 103 is adapted to receive image data comprising a 3D image to be displayed from display control unit 120 and to generate a corresponding output signal for display 102. 3D display unit 101 is an autostereoscopic display unit meaning that it is capable of generating an image by means of display 102 that is perceived by a user 140 observing the display 102 as a virtual 3D image 110. Such a virtual 3D image 110 can be generated by display 102 without the necessity for user 140 to wear spectacles by projecting each view required to generate depth perception into one eye of the observing user 140 (schematically illustrated by dashed lines).

An autostereoscopic display can be realized by a range of different techniques known to the skilled person, which are therefore not described in greater detail here. One technique comprises the continuous monitoring of the position of the user's head, e.g. by stereoscopic camera 131 or camera 132, and the adjustment of the projection optics and view content accordingly. The content of each view can be matched to the eye position, which can be identified using a face tracking technique. To control the intensity of light emitted by display 102 as a function of ray direction, display 102 can comprise a liquid crystal display with a continuously scanning spot source of light in the focal plane of a lens. The lens and light source produce rays all travelling in one general direction at any one instant, and the direction of the rays can be synchronized with the display of appropriate views of the 3D image on the liquid crystal display. In such a technique, the frame rate of display 102 can be doubled so that the eyes of the observing user 140 will integrate a 3D image over time. The faces of further users, e.g. passengers inside the vehicle, can be tracked and the frame rate of display 102 can be increased accordingly, so as to enable the perception of the virtual 3D image also by these users.

Other techniques that can be used with 3D display unit 101 include multiple view autostereoscopy, in which the display 102 projects views to every position where a viewer might be. Possible implementations include a lenslet array which covers a pixel for each view, wherein the lenslets combine to make the pixels comprising each view visible to an exclusive direction. Instead of an array of lenslets, diffraction gratings or an array of slits can be used. With a diffraction grating, it is possible to extend the field of view. The lenslet array and diffraction grating techniques can be implemented by using an underlying display with a resolution which is the product of the view resolution and the number of views. Instead of using such a high resolution display, several video projections can be lined up behind a lens. The lens makes each view corresponding to a projection visible to a different direction.

As can be seen, 3D display unit 101 can implement a range of techniques for generating a virtual 3D image 110 perceived by the user 140. It should be clear that other implementations are also conceivable, in which the 3D display unit 101 may for example further comprise shutter glasses worn by user 140, in which the different views are supplied to the eyes of user 140 in alternation, which enables the use of a conventional display 102 with doubled frame rate. In a further technique, each view is displayed with light of a different polarization, so that by wearing corresponding polarizing spectacles each eye of user 140 receives the intended view.

Display control unit 120 can supply general information an a 3D object 111 to be comprised in the virtual 3D image 110 to graphics processor 130, which can calculate the different views that need to be displayed to user 140 to generate the binocular perception of depth (stereopsis). When these different views are provided to user 140 by display 102, user 140 perceives the virtual 3D image 110. In the present example, 3D display unit 101 is configured so that the virtual 3D image 110 forms in front of display 102, i.e. between display 102 and the observing user 140, while in other embodiments it may only partially be located in front of the display 102.

It should be clear that display 102 may also be used to display two-dimensional (2D) images, and that the 3D display unit 101 may be the display unit of a vehicle electronic device, such as an infotainment system. Thus, menu structures, maps for navigation, multimedia information or media streams can be displayed on display 102.

Display control unit 120 can be implemented by means of a microprocessor. The microprocessor may be a microprocessor of the vehicle electronic device and may as such perform further functions. Other implementations of the display control unit are also conceivable, e.g. as multiple microprocessors, as a special purpose microprocessor, as a digital signal processor (DSP), as an application-specific integrated circuit (ASIC) or a field-programmable gate array. The microprocessor can operate according to programs stored in a memory (not shown) interfacing the microprocessor.

In other implementations, graphics processor 103 may not be provided, and its functions may be performed by display control unit 120. The 3D display unit 101 may thus comprise software code portions running on a microprocessor implementing the display control unit 120. It is also possible that graphics processor 103 and said microprocessor are provided within a single chip.

Vehicle user interface unit 100 further comprises the input unit 130. Input unit 130 comprises the stereoscopic camera 131 interfacing the evaluation unit 135. Sterescopic camera 131 monitors an area in which the virtual 3D image 110 forms. Generally, it will be adapted to monitor an area in front of display 102. The stereoscopic camera 131 comprises two optical system for acquiring two different views of the observed region. While in the embodiment of Fig. 1 the two optical systems are shown adjacent to one another, they may be arranged separately in other embodiments. As an example, an optical system may be arranged on each side of display 102. Each optical system of the stereoscopic camera 131 can comprise a CCD array for acquiring an image showing a view of the region to be monitored. The acquired image data is received by evaluation unit 135, which is adapted to reconstruct a 3D representation of the observed region from the two different views provided by the stereoscopic camera 131. The position of a user-controlled object, such as the hand 150 of user 140, can accordingly be determined in three dimensions. Further operations that can be performed by evaluation unit 135 comprise the identification of the object within the monitored region or area and the tracking of the detected object. Evaluation unit 135 is further adapted to detect and interpret a predefined variation of the user-controlled object in the images received from stereoscopic camera 131. In the embodiment of Fig. 1, the user-controlled object is the index finger of the hand 150 of user 140, such as the index finger. Its position, a change in its position and a variation in the shape of the index finger can be derived from the supplied images by evaluation unit 135. When evaluation unit 135 detects a predefined variation, it interprets it as a command. Such predefined variations of the user-controlled object can comprise the movement of the user-controlled object to a particular location, such as when the tip of the index finger of hand 150 is moved into the proximity of an element of the virtual 3D image 110, or when the shape of the user-controlled object changes, such as when the index finger of hand 150 performs a gesture.

Naturally, these are only a few examples, and a range of possibilities exists how the user-controlled object can be implemented and how a variation thereof can be interpreted as a command. Such examples comprise the use of a pen, a ring, or another marker located at the hand of the user, the change in position of which or the performance of a gesture by which can be detected as command. The detection of a finger of the user has the advantage that the user is not required to hold or wear additional objects.

To operate a vehicle electronic device by means of the vehicle user interface unit 100, the virtual image 110 comprising the 3D object 111 is generated by display control unit 102 and 3D display unit 101 such that the 3D object 111 comprises a first region 112 with plural interaction elements 115 and a second region 113 with plural interaction elements 115 located in two different spatial planes of the virtual 3D image 110. Naturally, the positions of the different spatial planes in which the regions of the 3D object are located vary with the angle under which the display is observed by the user, the planes may thus also be termed virtual spatial planes. In the example of Fig. 1, the 3D object 111 perceived by user 140 is a cube or cuboid, with the regions 112 and 113 each corresponding to a face of the cube. The interaction elements 115 can be menu items of a main menu or a submenu, yet they may also comprise information elements with information to be displayed to user 140. The position and shape of the 3D object 111 and the interaction elements 115 displayed on the faces of the object are controlled by display control unit 120. Besides a cube or a cuboid, display control unit 120 can be adapted to generate a virtual image of other types of 3D objects, such as other types of polyhedrons, e.g. an octagonal prism or the like. As the 3D object 111 comprises several faces, each face can display a different menu or submenu, or a certain class of information and control elements. By making use of a three-dimensional representation, the amount of information that can simultaneously be displayed can thus be multiplied.

Display control unit 120 is further adapted to control the generation of virtual 3D image 110 such that the faces of the object 111 are partially transparent, so that faces that lie on the backside of the object 111 as seen by user 140 are also visible. Thus, a particular piece of information or a particular control element, e.g. a menu item, can quickly be found and accessed by user 140. The user can be provided with a control element, e.g. in form of a physical button or an interaction element, for activating or deactivating the transparency, or for selecting a transparency value. The transparency value can lie within a range of 0% to about 50%, preferably of about 10% to about 20%, with 0% corresponding to an opaque region or face (regions covered by the opaque region are not visible) and 100% corresponding to a completely transparent (or invisible) region or face. Particularly in the range of 10%-20% of transparency, the transparent face itself is clearly visible, while the interaction elements on covered faces show through and thus are already perceivable.

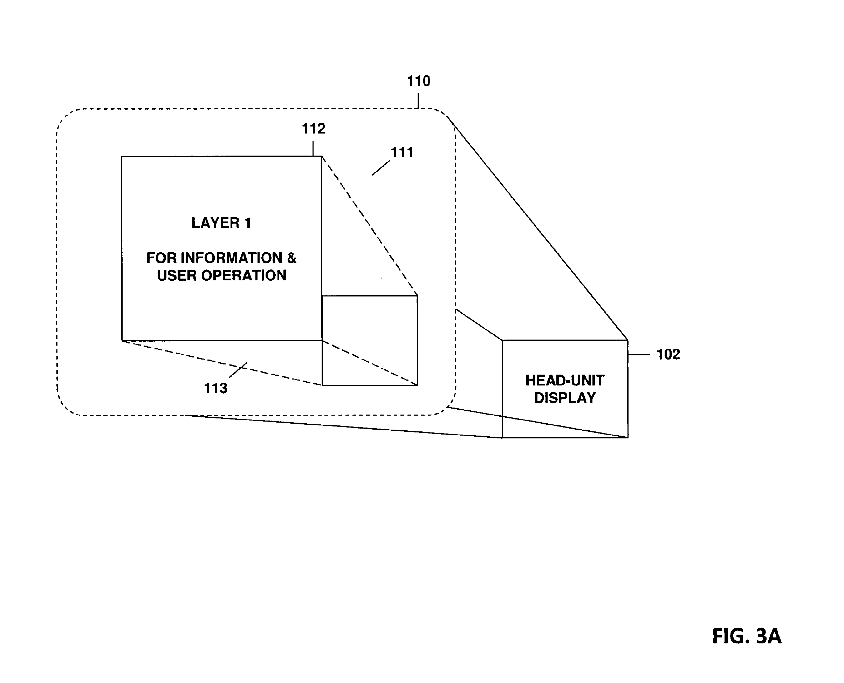

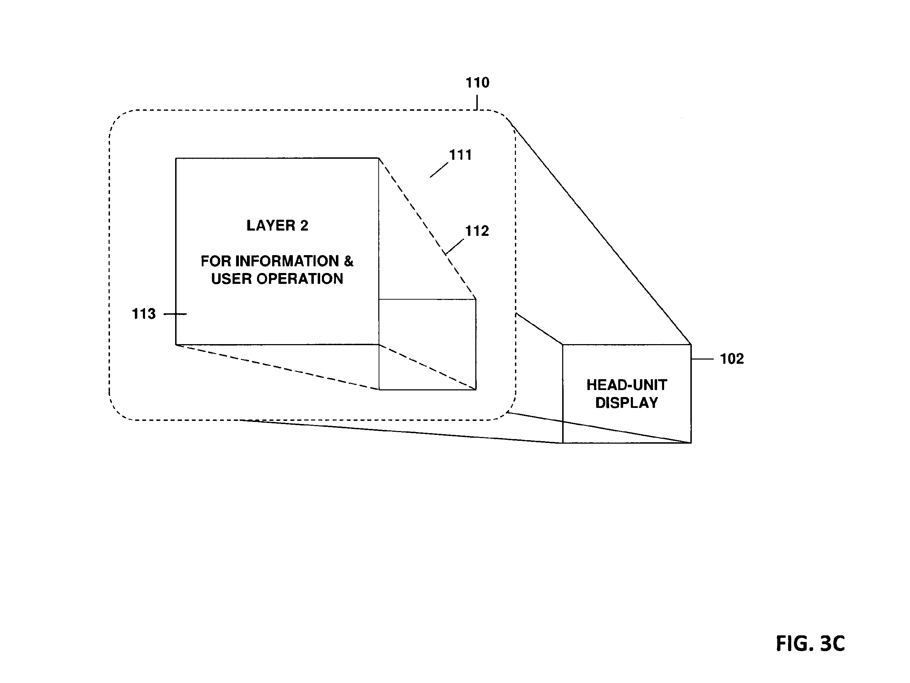

This situation is schematically illustrated in Figs. 3A to 3C. In Fig. 3A, region 112 is facing the user observing display 102, and the second region 113 is visible as a side face of cube 111 due to the partial transparency of face 112. An interaction element located on face 113 can thus be easily accessed by rotation of the cube 111 after which face 113 faces the user, as illustrated in Fig. 3C.

As display control unit 120 controls the generation of the virtual 3D image 110 by the 3D display unit 101, it has information available at which position the virtual image 110 is created, and thus where in space the 3D object 111 is located. This information is provided to evaluation unit 135 for the detection of a user input. As evaluation unit 135 now has available the position of 3D object 111 as observed by user 140 and the position of the user's hand 150, it can determine when the user-controlled object approaches or virtually touches an element of the virtual image 110. Input unit 130 is now adapted to recognize virtual touches to certain elements of the 3D object 111 and certain gestures as user commands. In one possible implementation, a virtual touch to one of the interaction elements 115 of face 112 of the 3D object 111 is recognized as a command to select and execute the corresponding interaction element, e.g. by executing a function associated with the interaction element. The virtual touch is detected when the tip of the index finger of the user's hand 150 comes to within a predetermined distance from the respective interaction element in the virtual image 110. Other implementations are similarly conceivable, such as performing a preselection of the interaction element by a first virtual touch and an execution of the associated function by a second virtual touch, or the execution of the function after a virtual touch having a predefined minimum duration, or the like. In the case of a preselection, the corresponding interaction element can be highlighted in the virtual image 110, so as to provide optical feedback to the user.

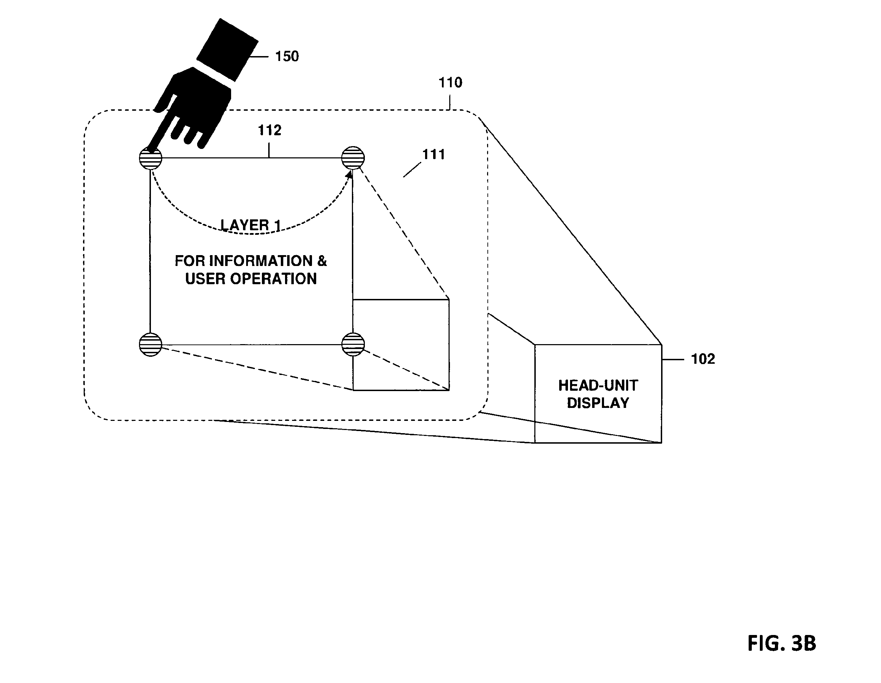

Apart form selecting and activating or executing interaction elements, the user can issue a command to rotate the 3D object 111 in order to access interaction elements on a different face of the object. This is illustrated in Figs. 3A-3C. In Fig. 3A the face 112 of 3D object 111 faces the user. For performing a rotation of the cube 111, the user places his index finger of hand 150 at a corner of the cube in the virtual 3D image. This positioning of the tip of the index finger at this position is recognized by means of stereoscopic camera 131 and evaluation unit 135 of the input unit 130. The user now performs a gesture by moving his index finger in the direction into which the 3D object 111 is to be rotated, as indicated by the arrow in Fig. 3B. Again, this gesture is recognized by input unit 130 by tracking the location and/or shape of hand 150, and is interpreted as a command to rotate the 3D object into the corresponding direction. This command is then supplied to display control unit 120, which performs the desired rotation of the 3D object and issues corresponding commands to the 3D display unit 101 which generates the corresponding virtual image, in which the object is rotated. Generating the virtual image means that the 3D display unit generates and displays the two views by means of display 102 which are perceived by user 140 as the virtual image 110. Fig. 3C illustrates the result of the operation, wherein the 3D object 111 is now oriented in such a way that the second face 113 faces the user.

While in some embodiments only interaction elements located in the region facing the user 140 are selectable while the interaction elements in other regions are disabled in order to prevent an accidental activation, the interaction elements of all regions may be active in other embodiments.

The vehicle user interface unit 100 will generally be operated by the driver of the vehicle or a passenger, the locations of which are usually known. Due to the different angles with which display 102 is observed by the different vehicle passengers or the driver, the virtual image 110 will be generated at different spatial positions for each user. Accordingly, vehicle user interface unit 100 may be provided with means for detecting which user is currently trying to input a command, so as to correctly determine the position of the virtual image 110 seen by the respective user. In modern vehicles sensors for determining the vehicle occupancy are provided, and information from these sensors can be used. As in a vehicle the positions of the driver or the other passengers are generally predefined by the corresponding seat positions, good estimations of the position of the virtual image 110 can be made without information from additional sources.

The determination of the position of the virtual 110 can be further improved by determining the position of the head of user 140. This can for example be achieved by making use of the images acquired by the stereoscopic camera 131 or by providing one or more additional cameras 132. Camera 132 can be arranged inside the vehicle cabin at a location from which the position of the passenger's head can be monitored. If a camera for monitoring the passenger's head position is already provided inside the vehicle, for example as part of a safety system, information provided by such a camera may of course also be used, i.e. camera 132 may be the camera of such a system. Evaluation unit 135 can perform a head tracking or a face tracking of the user's head in order to determine its position and thus the angle under which the user observes display 102. By making use of this information and of the information on the 3D image generated by the display control unit 120, the evaluation unit 135 can precisely determine the spatial position at which the user 140 observes the virtual 3D image 110. The spatial location of the interaction elements provided on 3D object 111 can thus precisely be determined enabling a robust and accurate activation of the interaction elements by user 140 using the user-controlled object, e.g. his finger.

To facilitate the operation, the vehicle user interface unit 100 is adapted to provide acoustic feedback to the user 140 when the user-controlled object comes to within a predetermined distance of an element of the 3D object in the virtual 3D image 110. This reduces the amount of time that user 140 has to focus on display 102 in order to operate the user interface. It is clear that a variety of implementations are conceivable for providing user feedback, with different sounds being played back for different events. As an example, a first audio signal may be provided when the finger of the user approaches the 3D object 111, e.g. with a changing frequency in accordance with the distance, a second sound may be provided when the finger of the user virtually touches an interaction element, and a third sound may be provided when the finger of the user is located at a corner or an edge of a face of the 3D object 111. Further acoustic signals can be provided for a preselection, activation or execution of an interaction element, or when a rotation of the 3D object 111 is performed. As a result, it becomes possible to operate the vehicle user interface unit 100 at a glance. The acoustic feedback signals can be generated by evaluation unit 135 and given out by means of an amplifier and a loudspeaker (not shown).

Accordingly, the vehicle user interface unit 100 provides a virtual, three-dimensional graphical user interface on which a plurality of interaction elements, such as menu items or information elements can be clearly arranged and easily accessed. As each face of the 3D object can display part of a menu structure, e.g. a menu or a submenu, a menu item of a submenu can be accessed without the need to browse through all the hierarchically higher menus.

It should be clear that the vehicle user interface unit 100 may comprise further components, such as mechanical control elements for user interaction, further display components and the like. The functional units shown in Fig. 1 can be implemented in a variety of ways. Evaluation unit 135 can be implemented by means of a microprocessor, e.g. the same microprocessor that implements display control unit 120 as mentioned above, or a separate microprocessor. Display control unit 120 and evaluation unit 135 can for example be implemented as software code portions running on such a microprocessor. Accordingly, they do not need to be physically separate units. Such a microprocessor may be the microprocessor of the vehicle electronic device which uses the user interface unit 100 for user interaction. The vehicle electronic device can be a head unit which controls vehicular functions and other electronic devices, such as a multimedia or a navigation system, or it may be a less complex system, such as a car stereo. The vehicle user interface unit 100 can also be provided separate from the vehicle electronic device, it may for example be implemented inside a headrest and communicate with the vehicle electronic device using wired or wireless communication. The passenger in the rear passenger compartment of a vehicle may thus make use of the vehicle user interface unit 100. It is thus also possible to provide plural of such user interface units inside the vehicle compartment, e.g. at least two.

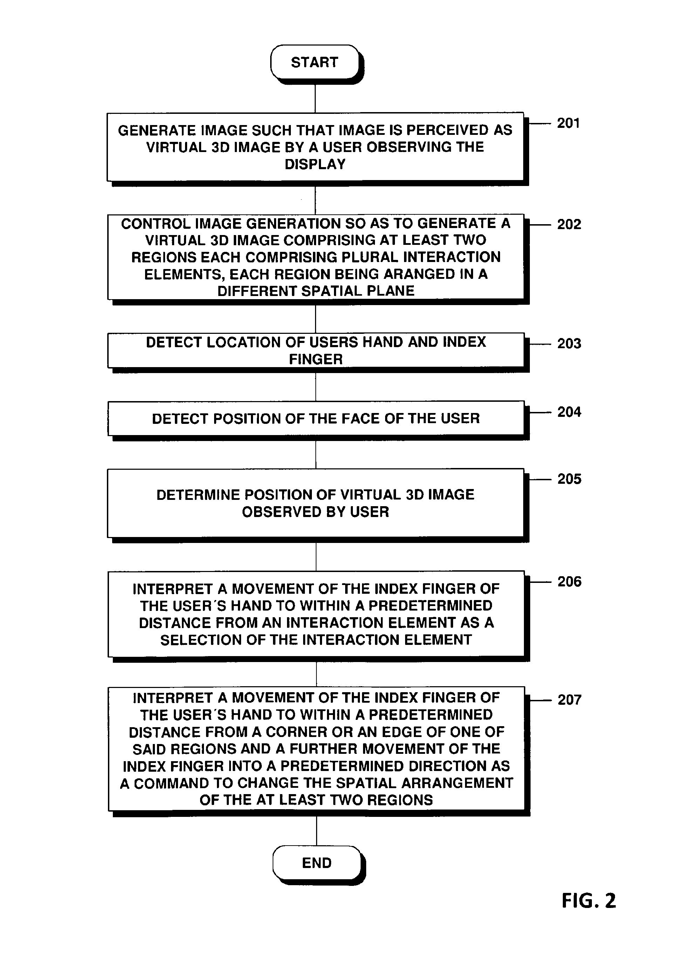

Fig. 2 shows a flow diagram of a method according to an embodiment of the present invention. The vehicle user interface unit 100 of Fig. 1 can be adapted so as to perform the method described in the following with respect to Fig. 2. In a first step 201 an image is generated, e.g. by the 3D display unit 101, such that the image is perceived as a virtual 3D image by a user observing the display. In step 202, the image generation is controlled so as to generate a virtual 3D image comprising at least two regions (e.g. the faces 112 and 113) each comprising plural interaction elements, with each region being arranged in a different spatial plane. This step can be performed by the display control unit 120. By making use of the different spatial planes, the amount of information that can be presented to the user can be multiplied. The location of the user's hand and index finger is detected in step 203, for example by means of input unit 130.

In the next step 205 the position in space at which the user observes the virtual 3D image is determined, optionally by making use of an additional camera to track the user's face in order to determine the viewing angle with which the user observes the display. The relative positions of the tip of the index finger of the user's hand and the elements comprised in the virtual image can thus be precisely determined.

If the user now moves the tip of his index finger to a predetermined distance from an interaction element arranged on the 3D object, this is detected, e.g. by input unit 130, and interpreted as a selection of the corresponding interaction element. This can result in the execution of a function associated with the interaction element, such as the adjustment of a parameter such as a volume setting or a temperature setting, the selection of a destination in a navigation application, the selection and playback of a media file, the initiation of a communication via a mobile telephony network or a car-to-car communication system, or the like.

If a user now wants to closer inspect or access an interaction element located on a different face of the 3D object, the user can, by means of his finger, give the command to change the spatial arrangement of the at least two regions comprising the interaction elements. In step 207 the movement of the index finger of the user's hand to within a predetermined distance from a corner or an edge of one of the regions, in the examples of Figs. 1 and 3 the faces of the 3D object, and a further movement of the index finger into a predetermined direction is interpreted as such a command. As described above with respect to Figs. 3A-C, the user can for example place his finger tip on the corner of the cube and drag it into one direction, as a result of which the cube is rotated so that the face comprising the desired interaction element is facing the user. The interaction elements of the particular submenu can thus be accessed by a simple gesture even if the submenu is arranged on the lowest level of the menu hierarchy and would otherwise only accessible by going through plural menu levels higher up in the hierarchy.

It is clear that the illustrated embodiments described above may be modified in a variety of ways without departing from the scope of the invention. For example the display control unit 120 may not only be adapted to generate a cube or cuboid as a 3D object, but another type of polyhedron or a sphere also conceivable, with spherical caps forming the regions in which the interaction elements are placed.

While some regions may only comprise interaction elements in the form of information elements, for example showing the current status of vehicle electronic systems or other vehicle systems, navigation information or the like, other regions may comprise interaction elements in the form of menu items for executing functions, entering further submenus, adjusting parameters, and the like. The combination of both types of interaction elements is also possible. As mentioned above, the functional units of the vehicle user interface unit according to the present invention can also be implemented in a variety of ways, e.g. as common or separate integrated circuits, as software code running on a microprocessor or the like.

As can be seen from the above, the inventive vehicle user interface unit can enable the visual presentation of a variety of information and other elements, such as from driver assistance systems, car-to-car communication, information from a vehicle entertainment system and a communication system, information obtained via an Internet connection and corresponding virtual control elements. A visual presentation of the information on plural virtual planes, which can be interconnected, enables a comprehensive presentation of the available information as well as a fast access. Zooming in onto the desired plane by a simple actuation of a finger, e.g. by the rotation of the partially transparent cube, and by implementing the activation of the elements by a virtual touch (virtual touchscreen), the information to be displayed can be manipulated in an intuitive way. Similarly, the operation of control elements of the vehicle electronic device is facilitated and made faster by means of the inventive vehicle user interface unit. Parameters to be adjusted can quickly and easily be accessed. By enabling the presentation of a plurality of information in a confined space, different classes of information, such as concerning the vehicle, a road, the infotainment system or the environment, can be displayed and linked with each other. As the physical space available inside a vehicle for a head unit is very limited, the larger virtual representation which provides more space for arranging the information is beneficial. Compared to a conventional touchscreen, making use of the virtual touchscreen prevents the forming of fingerprints on the display and the deposition of dirt on the display, and improves the hygienic standard.

## Claims

1. A vehicle user interface unit for a vehicle electronic device, comprising:
- a 3D display unit (101) comprising a display (102), the 3D display unit being adapted to display, in operation, an image such that the image is perceived by a user as a virtual 3D image (110) at least partially located in front of the display (102) when the user (140) observes the display (102);
- a display control unit (120) adapted to control the generation of the image by the 3D display unit (101) such that said virtual 3D image (110) comprises a 3D object (111) having at least two regions (112, 113) located in different spatial planes, each region comprising plural interaction elements (115); and
- an input unit (130) adapted to detect the location of a user-controlled object (150) and to interpret the detection of a predefined variation of the user-controlled object (150) as a selection of one of said interaction elements (115) comprised in the virtual 3D image (110).

2. The vehicle user interface unit according to claim 1, wherein the input unit (130) is configured such that the predefined variation of the user-controlled object comprises the movement of the user-controlled object to within a predetermined distance of an interaction element (115) in the virtual 3D image (110), the detection of such a movement being interpreted as a selection of the corresponding interaction element (115).

3. The vehicle user interface unit according to claim 1 or 2, wherein the display control unit (120) is configured to control the generation of the image in such a way that the region of the 3D object (111) which is located closer to an observing user (140) in the virtual 3D image (110) is an active region in which the interaction elements (115) are selectable, whereas the information elements of the at least one other region are not selectable.

4. The vehicle user interface unit according to any of the preceding claims, wherein the display control unit (120) is configured to control the generation of the image in such a way that the 3D object (111) is a polyhedron, preferably a cube or a cuboid, and that each of said regions (112,113) corresponds to a face of the polyhedron.

5. The vehicle user interface unit according to claim 4, wherein the display control unit (120) is configured to control the generation of the image in such a way that the polyhedron is oriented such that one of said faces is facing the observing user (140), the region corresponding to said face being an active region the interaction elements of which are selectable.

6. The vehicle user interface unit according to any of the preceding claims, wherein the input unit (130) is adapted to detect a second predefined variation of the user controlled object and to interpret it as a command to change the spatial arrangement of the at least two regions (112, 113).

7. The vehicle user interface unit according to claims 4 and 6, wherein the display control unit (120) is adapted to change the spatial arrangement of the at least two regions (112, 113) by rotating the polyhedron such that a different face of the polyhedron comprising different interaction elements is facing the observing user.

8. The vehicle user interface unit according to claim 6 or 7, wherein the input unit (130) is adapted to detect the positioning of a finger of the observing user (140) at a boundary or a corner of one of said regions (112,113) and the movement of the finger over a predetermined distance as the second predefined variation of the user-controlled object.

9. The vehicle user interface unit according to any of the preceding claims, wherein the vehicle user interface unit (100) is adapted to provide an acoustical feedback to the user (140) when the user-controlled object comes to within a predetermined distance of an element of the 3D object (111) in the virtual 3D image (110) and/or when a selection of one of the interaction elements (115) is detected.

10. The vehicle user interface unit according to any of the preceding claims, wherein the input unit (130) comprises a stereoscopic camera (131) adapted to monitor an area adjacent to a position at which the virtual 3D image (110) is created for detecting the location of said user-controlled object and a variation thereof.

11. The vehicle user interface unit according to any of the preceding claims, further comprising a camera (132) for monitoring the viewpoint from which the user (140) observes the display (102), the user interface unit (100) being adapted to determine the position at which the virtual 3D image (110) is seen by the user observing the display (102) on the basis of the detected viewpoint of the user.

12. The vehicle user interface unit according to any of the preceding claims, wherein the 3D display unit (101) is an autostereoscopic 3D display unit.

13. The vehicle user interface unit according to any of the preceding claims, wherein said 3D display unit (101) is housed in a face plate of the vehicle electronic device.

14. A vehicle infotainment system comprising a vehicle user interface unit (100) according to one of claims 1-13.

15. A vehicle cabin comprising an electronic device with a vehicle user interface unit (100) according to one of claims 1-13.

16. A method of operating a vehicle user interface unit (100) of a vehicle electronic device, comprising the steps of:
- by means of a 3D display unit (101), generating an image such that the image is perceived by a user (140) as a virtual 3D image (110) at least partially located in front of a display (102) of the 3D display unit (101) when the user (140) observes said display (102);
- controlling the generation of the image by the 3D display unit (101) such that said virtual 3D image (110) comprises a 3D object (111) having at least two regions (112, 113) located in different spatial planes, each region comprising plural interaction elements (115); and
- detecting the location of a user controlled object (150) and interpreting the detection of a predefined variation of the user controlled object (150) as a selection of one of said interaction elements (115) comprised in the virtual 3D image (110).

## Amended claims

### Amended claims in accordance with Rule 137(2) EPC.

**1.** A vehicle user interface unit for a vehicle electronic device, comprising:
- a 3D display unit (101) comprising a display (102), the 3D display unit being adapted to display, in operation, an image such that the image is perceived by a user as a virtual 3D image (110) at least partially located in front of the display (102) when the user (140) observes the display (102);
- a display control unit (120) adapted to control the generation of the image by the 3D display unit (101) such that said virtual 3D image (110) comprises a 3D object (111) having at least two regions (112, 113) located in different spatial planes, each region comprising plural interaction elements (115); and
- an input unit (130) adapted to detect the location of a user-controlled object (150) and to interpret the detection of a predefined variation of the user-controlled object (150) as a selection of one of said interaction elements (115) comprised in the virtual 3D image (110),
wherein the input unit (130) is configured such that the predefined variation of the user-controlled object comprises the movement of the user-controlled object to within a predetermined distance of an interaction element (115) in the virtual 3D image (110), the detection of such a movement being interpreted as a selection of the corresponding interaction element (115).

**2.** The vehicle user interface unit according to claim 1, wherein the display control unit (120) is configured to control the generation of the image in such a way that the region of the 3D object (111) which is located closer to an observing user (140) in the virtual 3D image (110) is an active region in which the interaction elements (115) are selectable, whereas the information elements of the at least one other region are not selectable.

**3.** The vehicle user interface unit according to any of the preceding claims, wherein the display control unit (120) is configured to control the generation of the image in such a way that the 3D object (111) is a polyhedron, preferably a cube or a cuboid, and that each of said regions (112, 113) corresponds to a face of the polyhedron.

**4.** The vehicle user interface unit according to claim 3, wherein the display control unit (120) is configured to control the generation of the image in such a way that the polyhedron is oriented such that one of said faces is facing the observing user (140), the region corresponding to said face being an active region the interaction elements of which are selectable.

**5.** The vehicle user interface unit according to any of the preceding claims, wherein the input unit (130) is adapted to detect a second predefined variation of the user controlled object and to interpret it as a command to change the spatial arrangement of the at least two regions (112, 113).

**6.** The vehicle user interface unit according to claims 3 and 5, wherein the display control unit (120) is adapted to change the spatial arrangement of the at least two regions (112, 113) by rotating the polyhedron such that a different face of the polyhedron comprising different interaction elements is facing the observing user.

**7.** The vehicle user interface unit according to claim 5 or 6, wherein the input unit (130) is adapted to detect the positioning of a finger of the observing user (140) at a boundary or a corner of one of said regions (112, 113) and the movement of the finger over a predetermined distance as the second predefined variation of the user-controlled object.

**8.** The vehicle user interface unit according to any of the preceding claims, wherein the vehicle user interface unit (100) is adapted to provide an acoustical feedback to the user (140) when the user-controlled object comes to within a predetermined distance of an element of the 3D object (111) in the virtual 3D image (110) and/or when a selection of one of the interaction elements (115) is detected.

**9.** The vehicle user interface unit according to any of the preceding claims, wherein the input unit (130) comprises a stereoscopic camera (131) adapted to monitor an area adjacent to a position at which the virtual 3D image (110) is created for detecting the location of said user-controlled object and a variation thereof.

**10.** The vehicle user interface unit according to any of the preceding claims, further comprising a camera (132) for monitoring the viewpoint from which the user (140) observes the display (102), the user interface unit (100) being adapted to determine the position at which the virtual 3D image (110) is seen by the user observing the display (102) on the basis of the detected viewpoint of the user.

**11.** The vehicle user interface unit according to any of the preceding claims, wherein the 3D display unit (101) is an autostereoscopic 3D display unit.

**12.** The vehicle user interface unit according to any of the preceding claims, wherein said 3D display unit (101) is housed in a face plate of the vehicle electronic device.

**13.** A vehicle infotainment system comprising a vehicle user interface unit (100) according to one of claims 1-12.

**14.** A vehicle cabin comprising an electronic device with a vehicle user interface unit (100) according to one of claims 1-12.

**15.** A method of operating a vehicle user interface unit (100) of a vehicle electronic device, comprising the steps of:
- by means of a 3D display unit (101), generating an image such that the image is perceived by a user (140) as a virtual 3D image (110) at least partially located in front of a display (102) of the 3D display unit (101) when the user (140) observes said display (102);
- controlling the generation of the image by the 3D display unit (101) such that said virtual 3D image (110) comprises a 3D object (111) having at least two regions (112, 113) located in different spatial planes, each region comprising plural interaction elements (115); and
- detecting the location of a user controlled object (150) and interpreting the detection of a predefined variation of the user controlled object (150) as a selection of one of said interaction elements (115) comprised in the virtual 3D image (110),
wherein the predefined variation of the user controlled object (150) is detected by detecting the movement of the user controlled object to within a predetermined distance of an interaction element (115) in the virtual 3D image (110), the detection of such a movement being interpreted as a selection of the corresponding interaction element (115).
